# EUROPEAN PATENT APPLICATION

(11) **EP 4 764 681 A1**
(43) Date of publication of application: **24.06.2026**
(21) Application number: 25221713.8
(22) Date of filing: 09.12.2025
(51) Int. Cl.: G02F 1/1333

(54) **COVER SHEET FOR DISPLAY DEVICE AND PACKAGE FOR DISPLAY DEVICE USING COVER SHEET**

(30) Priority: 19.12.2024 JP 2024223864
(71) Applicant: Alps Alpine Co., Ltd., Ota-ku, Tokyo 145-8501 (JP)
(72) Inventor: Iino, Makoto, Iwaki-city Fukushima (JP)
(74) Representative: Schmitt-Nilson Schraud Waibel Wohlfrom Patentanwälte Partnerschaft mbB

(57) **Abstract**

A cover sheet for a display device is disclosed. The display device includes a case housing a display cell and a transparent panel covering a display screen. The cover sheet includes a front sheet portion for covering a front surface of the transparent panel, a rear sheet portion for covering a rear surface of the case, and a connecting piece extending from the front or rear sheet portion, which are integrally formed. The front sheet portion has a bonding inner surface, the rear sheet portion has an opposing inner surface, and the connecting piece has a bonding inner surface, all formed on the same sheet surface. At least the bonding inner surfaces of the front sheet portion and connecting piece are re-peelable adhesive surfaces. The front bonding surface adheres to the transparent panel, while the connecting piece adheres to an outer surface of the front or rear sheet portion.

## Description

The present application is based on and claims priority to Japanese Patent Application No. 2024-223864, filed on December 19, 2024.

The present disclosure relates to a cover sheet for a display device that can be easily attached to and detached from the display device, and to a package for the display device using the cover sheet.

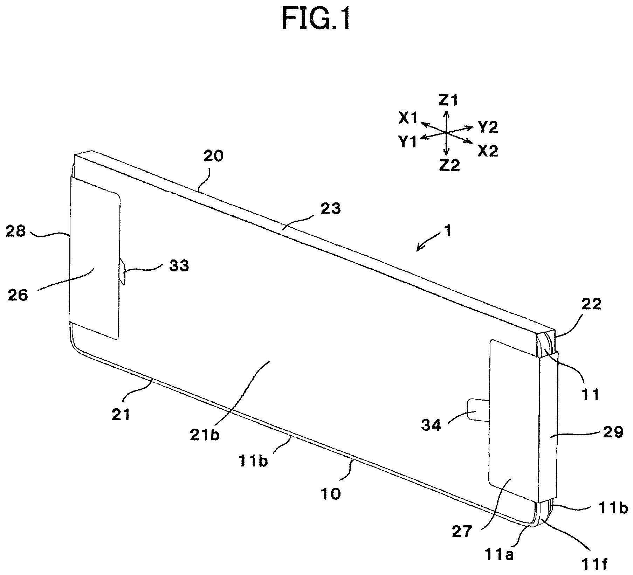

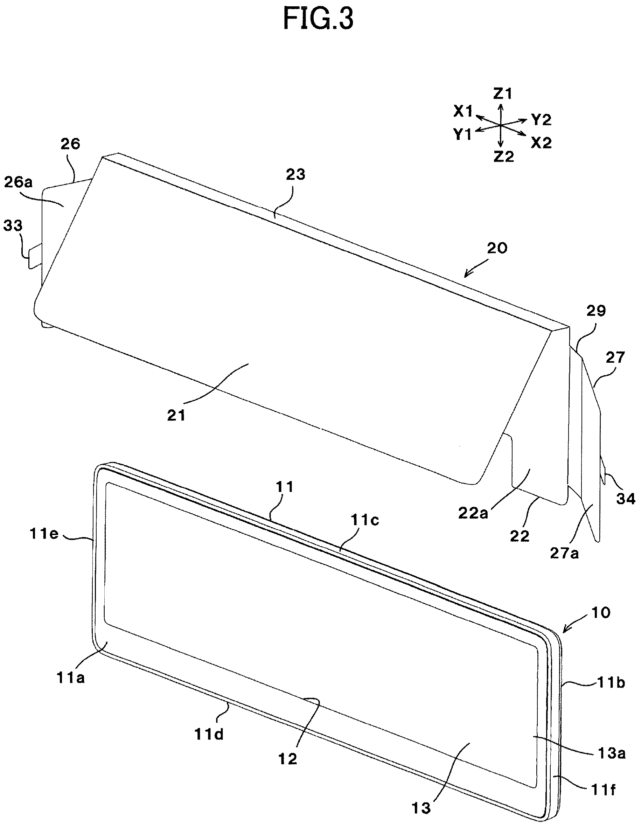

JP 2008-304760A (Patent Document 1) discloses a protective cover material used for a display. The protective cover material illustrated in FIG. 1 is attached so as to cover the entire surface of the display part of the display module, and a bent part bent from a part of the protective cover material is installed so as to cover the upper surface and the lower surface of the bezel. The protective cover material illustrated in FIG. 3 is attached so as to cover the entire surface of the display part of the display module, and a bent part is formed by bending a part of the protective cover material so as to cover the lower surface of the bezel and go around the rear side of the display module. In either embodiment, the protective cover material is fixed to the surface of the display module using an adhesive tape.

JP 2013-190576A (Patent Document 2) discloses a cover film for covering a display device. This cover film includes a front sticking portion and protruding surface portions protruding outward from upper, lower, left, and right side edges of the front sticking portion. In the cover film, the front sticking portion is stuck to the outer periphery of the display, the protruding surface portions are bent so as to go around the back chassis side, and the protruding surface portions are stuck to the outer surface of the protective member and the rear surface of the base surface portion.

Since the protective cover material described in JP 2008-304760A is fixed to the surface of the display module by an adhesive tape, mounting and detaching the protective cover material are complicated. In addition, in order to securely fix the protective cover material to the display module, it is necessary to set the adhesive force of the adhesive tape to be high, but when the adhesive force is high, peeling the adhesive tape becomes troublesome, and the adhesive tape cannot be completely peeled off, so that a part of the adhesive remains on the surface of the display module.

In the cover film described in JP 2013-190576A, the front adhesive portion is attached to the outer periphery of the display, and the protruding surface portion is attached to the side surface and the back surface of the display. In order to prevent the cover film from detaching, it is necessary for the front adhesive portion and the protruding surface portion to exhibit a strong adhesive force, and similarly to the problem of the invention described in JP 2008-304760A, it is not easy to peel the cover film from the display, and a part of the adhesive remains on the display.

The present disclosure relates to a cover sheet for a display device and a package for a display device according to the appended claims. Embodiments are disclosed in the dependent claims. According to an embodiment of the present disclosure, a cover sheet for a display device is provided, wherein the display device includes a case for housing a display cell and a transparent panel for covering a display screen oriented forward from the case. The cover sheet includes:
a front sheet portion configured to cover a front surface of the transparent panel;
a rear sheet portion configured to cover a rear surface of the case; and
a connecting piece extending from either the rear sheet portion or the front sheet portion,
wherein the front sheet portion, the rear sheet portion, and the connecting piece are integrally formed,
wherein the front sheet portion has a bonding inner surface and an outer surface, the rear sheet portion has an opposing inner surface and an outer surface, and the connecting piece has a bonding inner surface and an outer surface, the bonding inner surface of the front sheet portion, the bonding inner surface of the connecting piece, and the opposing inner surface being disposed on a same sheet surface,
wherein at least the bonding inner surface of the front sheet portion and the bonding inner surface of the connecting piece are re-peelable adhesive surfaces,
wherein the bonding inner surface of the front sheet portion is configured to be adhesively bonded to the front surface of the transparent panel, and
wherein the bonding inner surface of the connecting piece is configured to be adhesively bonded to either the outer surface of the front sheet portion or the outer surface of the rear sheet portion.

In the cover sheet, an entire sheet surface, including the bonding inner surface of the front sheet portion, the bonding inner surface of the connecting piece, and the opposing inner surface, may be preferably formed as a re-peelable adhesive surface.

In the cover sheet, the opposed inner surface of the rear sheet portion may be a non-adhesive surface.

In the cover sheet, for example, the entire sheet surface, including the bonding inner surface of the front sheet portion, the bonding inner surface of the connecting piece, and the opposing inner surface, may be formed as a re-peelable adhesive surface, and a release sheet may be disposed on the opposing inner surface.

The cover sheet may preferably include a base film made of polyethylene terephthalate (PET).

According to another embodiment of the present disclosure, a package for a display device is provided. The package includes:
a display device including a case for housing a display cell and a transparent panel for covering a display screen oriented forward from the case; and
a cover sheet configured to cover the display device,
wherein the cover sheet includes a front sheet portion covering a front surface of the transparent panel, a rear sheet portion covering a rear surface of the case, and a connecting piece extending from either the rear sheet portion or the front sheet portion,
wherein the front sheet portion, the rear sheet portion, and the connecting piece are integrally formed,
wherein the front sheet portion has a bonding inner surface and an outer surface, the rear sheet portion has an opposing inner surface and an outer surface, and the connecting piece has a bonding inner surface and an outer surface, the bonding inner surface of the front sheet portion, the bonding inner surface of the connecting piece, and the opposing inner surface being disposed on a same sheet surface,
wherein at least the bonding inner surface of the front sheet portion and the bonding inner surface of the connecting piece are re-peelable adhesive surfaces,
wherein the bonding inner surface of the front sheet portion is adhesively bonded to the front surface of the transparent panel, and
wherein, when the connecting piece extends from the rear sheet portion, the connecting piece extends forward of the display device and the bonding inner surface of the connecting piece is adhesively bonded to the outer surface of the front sheet portion, and when the connecting piece extends from the front sheet portion, the connecting piece extends rearward of the display device and the bonding inner surface of the connecting piece is adhesively bonded to the outer surface of the rear sheet portion.

In the package, the cover sheet may have an entire sheet surface formed as a re-peelable adhesive surface, the entire sheet surface including the bonding inner surface of the front sheet portion, the bonding inner surface of the connecting piece, and the opposing inner surface; a rear surface of the case may have a greater surface roughness than a front surface of the transparent panel; and the opposing inner surface of the rear sheet portion may not be adhered to the rear surface of the case.

In the package, the cover sheet may have an entire sheet surface formed as a re-peelable adhesive surface, the entire sheet surface including the bonding inner surface of the front sheet portion, the bonding inner surface of the connecting piece, and the opposing inner surface; and a release sheet may be disposed on the opposing inner surface.

In the package, the cover sheet may preferably include a base film made of polyethylene terephthalate (PET).

### BRIEF DESCRIPTION OF THE DRAWINGS

Other objects and further features of the present disclosure will be apparent from the following detailed description when read in conjunction with the accompanying drawings, in which:
FIG. 1 is a perspective view illustrating a package for a display device according to a first embodiment of the present disclosure as viewed from the front;
FIG. 2 is a perspective view illustrating the package for the display device according to the first embodiment of the present disclosure as viewed from the rear;
FIG. 3 is a perspective view illustrating the display device and a cover sheet separated from each other in the package for the display device according to the first embodiment of the present disclosure, as viewed from the front;
FIG. 4 is a perspective view illustrating the display device and the cover sheet separated from each other in the package for the display device according to the first embodiment of the present disclosure, as viewed from the rear;
FIG. 5 is an unfolded front view illustrating the cover sheet used in the package for the display device according to the first embodiment of the present disclosure in a planar unfolded state with its inner surface oriented forward;
FIG. 6A is an enlarged cross-sectional view illustrating a portion taken along the line A-A of the cover sheet illustrated in FIG. 5, and FIG. 6B is an enlarged cross-sectional view illustrating a portion taken along the line B-B of the cover sheet illustrated in FIG. 5;
FIG. 7 is an unfolded front view illustrating a modified example of the cover sheet used in the package for the display device according to the first embodiment of the present disclosure in a planar unfolded state with its inner surface oriented forward;
FIG. 8 is an enlarged cross-sectional view illustrating a portion taken along the line VIII-VIII of the cover sheet illustrated in FIG. 7;
FIG. 9 is a perspective view illustrating a package for a display device according to a second embodiment of the present disclosure as viewed from the front;
FIG. 10 is a perspective view illustrating the display device and a cover sheet separated from each other in the package for the display device according to the second embodiment of the present disclosure, as viewed from the front; and
FIG. 11 is a perspective view illustrating a package for a display device according to a third embodiment of the present disclosure as viewed from the rear.

According to the present disclosure, it is desirable to provide a cover sheet for a display device and a package for a display device using the cover sheet, which is easy to attach to and detach from the display device and does not cause the adhesive to adhere to and remain on the surface of the case.

According to the present disclosure, the cover sheet can be easily attached to a display device simply by adhering the bonding inner surface, which is a re-peelable adhesive surface of the front sheet portion, to the front surface of the transparent panel of the display device, and by adhering the bonding inner surface, which is a re-peelable adhesive surface of the connecting piece, to the outer surface of either the front sheet portion or the rear sheet portion. Although the re-peelable adhesive surface has relatively weak adhesive strength, the front surface of the transparent panel has a surface roughness close to that of a mirror surface. Therefore, reliable adhesion can be achieved by bringing the bonding inner surface of the front sheet portion into close contact with the front surface of the transparent panel. In addition, since the outer surfaces of the front sheet portion and the rear sheet portion are also smooth with low surface roughness, the bonding inner surface of the connecting piece can be brought into close contact with either of these outer surfaces to ensure reliable adhesion. On the other hand, because the bonding inner surface of the connecting piece can be easily peeled off from the outer surface of the front or rear sheet portion, and the bonding inner surface, which is a re-peelable adhesive surface of the front sheet portion, can also be easily peeled off from the front surface of the transparent panel, the cover sheet can be easily removed.

Since the entire surface of the sheet, including the bonding inner surface and the opposing inner surface, is made of the re-peelable adhesive surface, it is not necessary to partially provide the re-peelable adhesive surface, and the cover sheet can be easily constructed. That is, the cover sheet can be formed by cutting a base film having a re-peelable adhesive layer on the entire surface. Although the re-peelable adhesive surface can be adhered to a surface having a small surface roughness, such as the front surface of the transparent panel, it does not easily adhere to a surface having a large surface roughness, such as the rear surface of the case. Therefore, even if the entire surface of the sheet is the re-peelable adhesive surface, it does not adhere to the surface of the case other than the transparent panel, or even if it is adhered to the surface of the case, its bonding force becomes extremely weak, and the adhesive force against the surface of the case does not become a resistance when the cover sheet is removed. Furthermore, no adhesive remains on the surface of the case. Furthermore, by leaving the release sheet on the opposing inner surface of the rear sheet portion, the opposing inner surface of the rear sheet portion can be a non-adhesive surface.

In the following, embodiments of the present disclosure will be described with reference to the accompanying drawings.

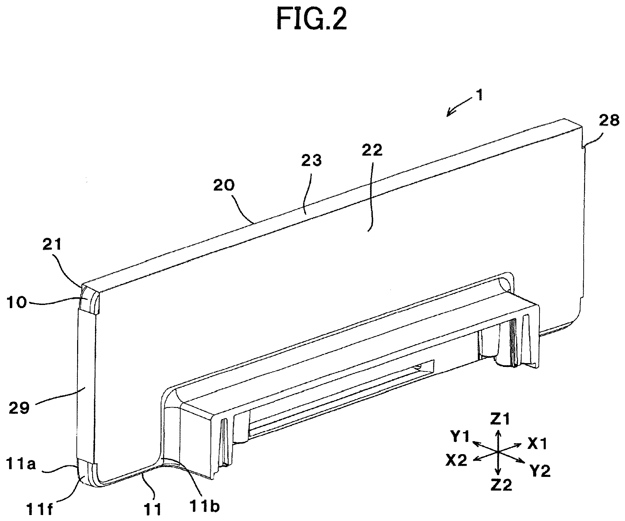

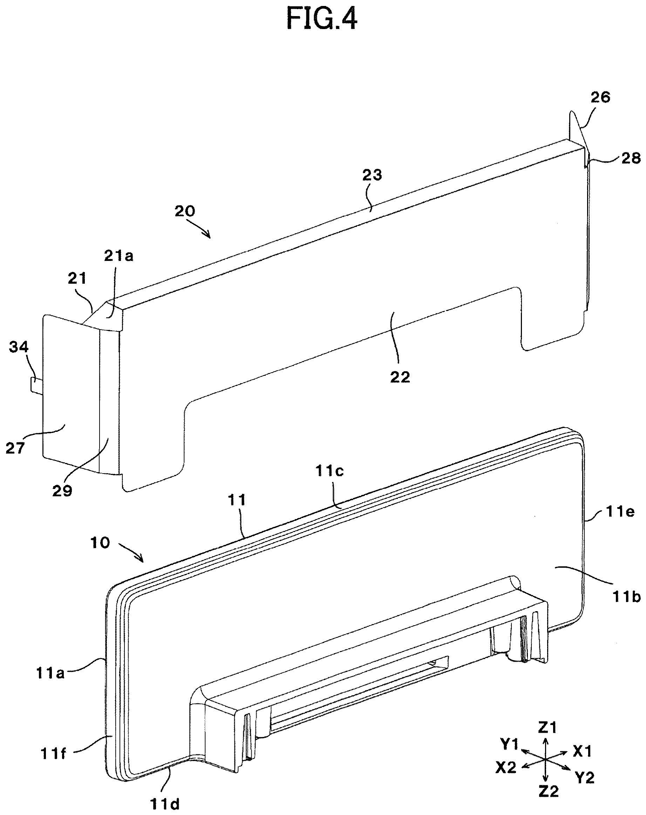

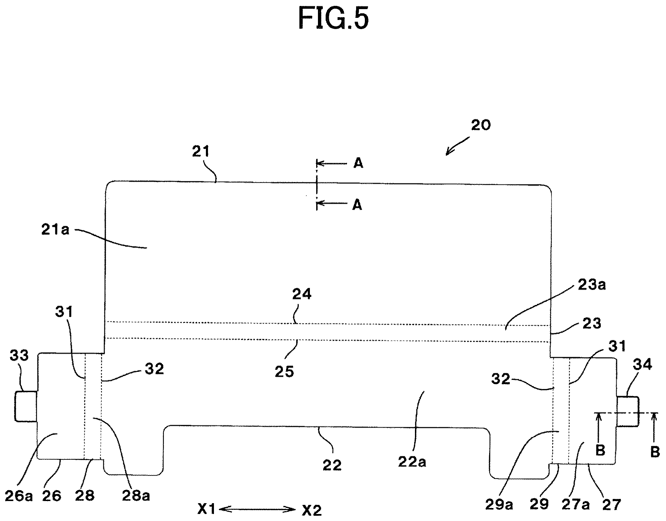

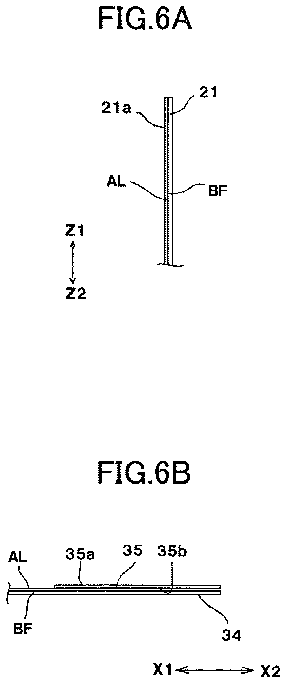

FIGS. 1 and 2 illustrate a package 1 of a display device according to a first embodiment of the present disclosure. FIGS. 3 and 4 illustrate a display device 10 and a cover sheet 20 that constitute the package 1, and FIGS. 5 and 6 illustrate a structure of the cover sheet 20. In the drawings, the Y1-Y2 direction represents the front-rear direction, with the Y1 direction being the front side and the Y2 direction being the rear side. The X1-X2 direction represents the lateral direction, with the X1 direction being the left side and the X2 direction being the right side. The Z1-Z2 direction represents the vertical direction, with the Z1 direction being upward and the Z2 direction being downward.

The display device 10 illustrated in FIGS. 3 and 4 is for in-vehicle application. Alternatively, the display device 10 may be for home, gaming, theater, or similar applications. The display device 10 includes a case 11. The case 11 has a front surface 11a facing forward (in the Y1 direction) and a rear surface 11b facing rearward (in the Y2 direction). The case 11 also has an upper surface 11c facing upward (in the Z1 direction), a lower surface 11d facing downward (in the Z2 direction), a left surface 11e facing leftward (in the X1 direction), and a right surface 11f facing rightward (in the X2 direction).

A display unit is housed inside the case 11. The display unit includes a display cell and an electronic circuit unit for driving the display cell. The display cell is a liquid crystal display cell or an organic EL display cell. As illustrated in FIG. 3, a rectangular display window 12 is opened in the front surface 11a of the case 11, and a display screen of the display cell appears inside the display window 12. The display screen is directed forward (Y1 direction). A transparent panel 13 is installed on the front surface 11a of the case around the display window 12, and the display screen is covered with the transparent panel 13. The transparent panel 13 is formed of a transparent glass plate or a transparent resin plate such as an acrylic.

The case 11 is formed by die casting from a light metal material such as a magnesium alloy. The rear surface 11b, the upper surface 11c, the lower surface 11d, the left surface 11e, and the right surface 11f are painted surfaces subjected to a matte finish treatment, for example, a matte black painted surface. Since a front surface 13a oriented forward of the transparent panel 13 is substantially a mirror surface, the surface roughness of the rear surface 11b, the upper surface 11c, the lower surface 11d, the left surface 11e, and the right surface 11f is sufficiently greater than that of the front surface 13a of the transparent panel 13.

In FIG. 5, the cover sheet 20 is spread out in a planar form, with the inner surface facing the display device 10 when packaged oriented forward. As illustrated in the cross-sectional views of FIGS. 6A and 6B, the cover sheet 20 has a single base film BF. A re-peelable adhesive layer AL is laminated on the inner surface of the base film BF, and the inner surface of the cover sheet 20 is a re-release adhesive surface. The base film BF of the cover sheet 20 is made of a resin material having a high flexural rigidity so that the re-release adhesive surface of the inner surface does not come into close contact with an uneven surface such as the rear surface 11b of the case 11 which is a coated surface subjected to a matte treatment. The base film BF serving as the cover sheet 20 preferably has a bending strength measured by "ASTM (American Society for Testing and Materials): D790" of 90 MPa or more, more preferably 100 MPa or more. The base film BF satisfying this condition includes PET, PMMA, PA66 or the like. The thickness of the base film BF is preferably 0.03 mm or more and 0.1 mm or less. In this embodiment, the base film BF of the cover sheet 20 is a PET film having a thickness of 0.05 mm.

As illustrated in FIGS. 3, 4, and 5, the cover sheet 20 includes a front sheet portion 21 and a rear sheet portion 22, and a vertical intermediate portion 23 positioned between the front sheet portion 21 and the rear sheet portion 22. In the vertical direction, the front sheet portion 21, the vertical intermediate portion 23, and the rear sheet portion 22 are continuous in this order. As illustrated in FIG. 5, perforations 24 extending in the lateral direction (X1 to X2 direction) are formed at the boundary between the front sheet portion 21 and the vertical intermediate portion 23, and perforations 25 extending in the lateral direction are formed at the boundary between the vertical intermediate portion 23 and the rear sheet portion 22.

As illustrated in FIG. 5, a left connecting piece 26 extends in the left direction (X1 direction) from the rear sheet portion 22, and a right connecting piece 27 extends in the right direction (X2 direction) from the rear sheet portion 22. A lateral intermediate portion 28 is provided between the left connecting piece 26 and the rear sheet portion 22, and a lateral intermediate portion 29 is provided between the right connecting piece 27 and the rear sheet portion 22. The rear sheet portion 22, the lateral intermediate portion 28, and the left connecting piece 26 are continuous in this order toward the left direction (X1 direction), and the rear sheet portion 22, the lateral intermediate portion 29, and the right connecting piece 27 are continuous in this order toward the right direction (X2 direction). Perforations 31 extending in the vertical direction (Z1 to Z2 direction) are formed at a boundary between the left connecting piece 26 and the lateral intermediate portion 28, and perforations 32 extending in the vertical direction are formed at a boundary between the lateral intermediate portion 28 and the rear sheet portion 22. Similarly, perforations 31 are formed between the right connecting piece 27 and the lateral intermediate portion 29, and perforations 32 are formed at a boundary between the lateral intermediate portion 29 and the rear sheet portion 22. A tab 33 protruding leftward from the left connecting piece 26 and a tab 34 protruding rightward from the right connecting piece 27 are integrally formed.

Of the inner surface of the cover sheet 20 illustrated in FIG. 5, the inner surface of the front sheet portion 21 is a bonding inner surface 21a, the inner surface of the left connecting piece 26 is a bonding inner surface 26a, and the inner surface of the right connecting piece 27 is a bonding inner surface 27a. The inner surface of the rear sheet portion 22 is an opposing inner surface 22a. The inner surface of the vertical intermediate portion 23 is an intermediate inner surface 23a, the inner surface of the lateral intermediate portion 28 is an intermediate inner surface 28a, and the inner surface of the lateral intermediate portion 29 is an intermediate inner surface 29a. The bonding inner surfaces 21a, 26a, and 27a, the opposing inner surface 22a, and the intermediate inner surfaces 23a, 28a, and 29a are formed on the same sheet surface of the cover sheet 20 (base film BF).

On the bonding inner surfaces 21a, 26a, and 27a, the opposing inner surface 22a, the intermediate inner surfaces 23a, 28a, and 29a, and further the inner surfaces of tabs 33 and 34 of the cover sheet 20, a re-peelable adhesive layer AL is disposed on the surface of the base film BF, as illustrated in FIGS. 6A and 6B. Thus, the cover sheet 20 has its entire inner surface, that is, the entire sheet surface appearing in FIG. 5, formed as a re-peelable adhesive surface. The re-peelable adhesive layer AL constituting the re-peelable adhesive surface is a micro-adhesive layer, and is a silicone-based adhesive or an acrylic-based adhesive. The re-peelable adhesive layer AL preferably has an ultra-low adhesive force of about 0.5 to 30 mN/25 mm, as measured according to ASTM (American Society for Testing and Materials) D3330. Although the entire inner surface of the cover sheet 20 is a re-peelable adhesive surface, the outer surface opposite to the inner surface, which faces outward when the cover sheet 20 is attached to the display device 10, is a non-adhesive surface without the re-peelable adhesive layer AL.

As illustrated in FIG. 6B, an adhesive tape 35 is attached to the inner surface of the re-peelable adhesive layer AL of the tab 34. The adhesive surface 35b of the adhesive tape 35 is adhesively bonded to the re-release adhesive surface, and the non-adhesive surface 35a of the adhesive tape 35 appears on the inner surface side of the cover sheet 20. The left tab 33 has the same structure, and the inner surfaces of the left and right tabs 33 and 34 are non-adhesive surfaces.

Next, the operations for attaching and removing the cover sheet 20 in the package 1 of the display device will be described. As illustrated in FIGS. 3 and 4, the cover sheet 20 can be folded at the positions of the perforations 24 and 25 to form crease lines in the base film BF, thereby enabling the front sheet portion 21 and the rear sheet portion 22 to face each other in the vertical direction (Y1-Y2 direction). Further, by forming crease lines in the base film BF at the positions of the left and right perforations 31 and 32, the left connecting piece 26 and the right connecting piece 27, which extend laterally from the rear sheet portion 22, can be directed forward (in the Y1 direction).

In the operation of attaching the cover sheet 20 to the display device 10, the bonding inner surface 21a, which is the re-peelable adhesive surface of the front sheet portion 21, is adhered and bonded to the front surface 13a of the transparent panel 13, and the rear sheet portion 22 covers the rear surface 11b of the case 11. The left connecting piece 26 extending leftward from the rear sheet portion 22 and the right connecting piece 27 extending rightward are extended forward of the display device 10, and as illustrated in FIG. 1, the bonding inner surface 26a, which is the re-peelable adhesive surface of the left connecting piece 26, is adhered and bonded to an outer surface 21b of the front sheet portion 21, while the bonding inner surface 27a, which is the re-peelable adhesive surface of the right connecting piece 27, is adhered and bonded to the outer surface 21b of the front sheet portion 21. Through this operation, as illustrated in FIGS. 1 and 2, the package 1 is completed in which the display device 10 is covered with the cover sheet 20.

Although the re-peelable adhesive surface on the inner surface of the cover sheet 20 is an extremely low-tack adhesive layer, the front surface 13a of the transparent panel 13 is mirror-finished and has an extremely small surface roughness. Therefore, when the bonding inner surface 21a of the front sheet portion 21 is adhered to the front surface 13a, the front sheet portion 21 can maintain a bonded state with the front surface 13a. Moreover, the outer surface 21b of the front sheet portion 21, which faces forward (in the Y1 direction), is the film surface of the base film BF, and like the front surface 13a of the transparent panel 13, is a smooth surface with extremely small surface roughness. Accordingly, even though the adhesive strength of the re-peelable adhesive surfaces forming the bonding inner surfaces 26a and 27a is extremely low, by adhering the bonding inner surface 26a of the left connecting piece 26 and the bonding inner surface 27a of the right connecting piece 27 to the outer surface 21b of the front sheet portion 21, the left connecting piece 26 and the right connecting piece 27 can maintain a bonded state with the outer surface 21b of the front sheet portion 21.

In the package 1 of the display device 10 illustrated in FIGS. 1 and 2, the front sheet portion 21 of the cover sheet 20 is adhered closely to the front surface 13a of the transparent panel 13. The rear surface 11b of the case 11 is covered with the rear sheet portion 22 of the cover sheet 20, the upper surface 11c of the case 11 is covered with the vertical intermediate portion 23 of the cover sheet 20, and the left surface 11e and the right surface 11f of the case 11 are covered with the lateral intermediate portions 28 and 29 of the cover sheet 20. With most portions of the display device 10 being covered by the cover sheet 20, the display device 10 can be installed inside a vehicle, and damage to the display panel and the case 11 of the display device 10 can be prevented.

When removing the cover sheet 20 from the display device 10, as illustrated in FIG. 1, the tabs 33 and 34, which are positioned on the outer surface 21b of the front sheet portion 21 of the cover sheet 20 and are not bonded to the outer surface 21b, are held, and the left connecting piece 26 and the right connecting piece 27 are peeled forward. Since the bonding inner surface 26a of the left connecting piece 26 and the bonding inner surface 27a of the right connecting piece 27 are re-peelable adhesive surfaces with extremely weak adhesive strength, the left connecting piece 26 and the right connecting piece 27 can be easily peeled from the outer surface 21b of the front sheet portion 21 with a small force.

Thereafter, the left connecting piece 26 and the right connecting piece 27 are held by hand, and the rear sheet portion 22 is lifted upward (in the Z1 direction) from the rear side (in the Y2 direction). The rear surface 11b of the case 11 has a larger surface roughness than the front surface 13a of the transparent panel 13 because it is finished with a matte coating or the like. In addition, the base film BF serving as the cover sheet 20 is a film having relatively high rigidity, such as PET, and therefore does not readily conform to the minute unevenness of the rear surface 11b of the case 11, making it difficult to adhere closely. Accordingly, even if the opposing inner surface 22a of the rear sheet portion 22 serves as the re-peelable adhesive surface, the opposing inner surface 22a does not adhere to the rear surface 11b, and even if the opposing inner surface 22a does adhere, the rear sheet portion 22 can be easily separated from the rear surface 11b. The intermediate inner surface 23a of the vertical intermediate portion 23 and the intermediate inner surfaces 28a and 29a of the lateral intermediate portions 28 and 29 of the cover sheet 20 also serve as re-peelable adhesive surfaces; however, since the surface roughness of the upper surface 11c, the left surface 11e, and the right surface 11f of the case 11 is greater than that of the front surface 13a of the transparent panel 13, the intermediate inner surface 23a and the intermediate inner surfaces 28a and 29a do not appreciably adhere, and the vertical intermediate portion 23 and the lateral intermediate portions 28 and 29 can be separated from the case 11. Furthermore, no adhesive layer remains attached on the rear surface 11b, the upper surface 11c, or the left and right surfaces 11e and 11f of the case 11.

By lifting the rear sheet portion 22 of the cover sheet 20 upward and peeling the front sheet portion 21 from the front surface 13a of the transparent panel 13, the cover sheet 20 can be removed from the display device 10. Since the bonding inner surface 21a of the front sheet portion 21 serves as the re-peelable adhesive surface, it can be easily peeled off from the front surface 13a of the transparent panel 13.

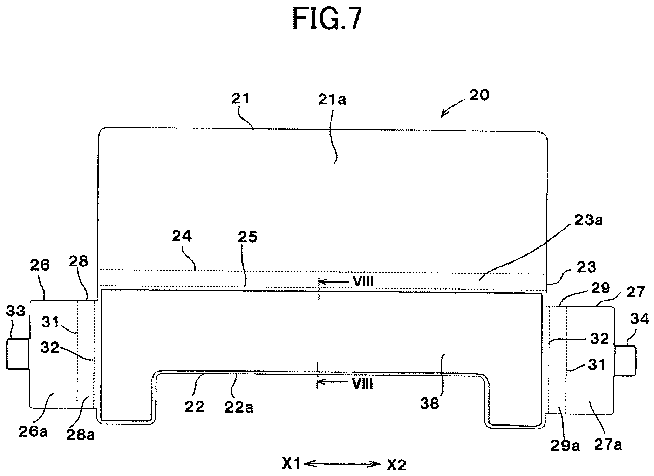

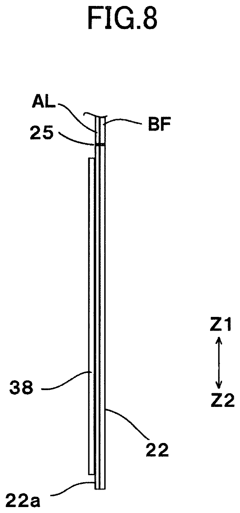

FIGS. 7 and 8 illustrate a modified example of the cover sheet 20 used in the package 1 of the display device according to the first embodiment. In the cover sheet 20 illustrated in FIG. 5, since the entire inner surface facing forward of the drawing is a re-peelable adhesive layer, the entire re-peelable adhesive surface (excluding tabs 33 and 34) is covered with a release sheet (separator). Immediately before covering the display device 10, the release sheet is peeled off to expose the entire re-peelable adhesive surface on the inner side of the cover sheet 20. In the modified example of the cover sheet 20 illustrated in FIGS. 7 and 8, only the portion covering the opposing inner surface 22a of the rear sheet portion 22 is left with a release sheet 38, so that the opposing inner surface 22a of the rear sheet portion 22, where the release sheet 38 remains, serves as a non-adhesive surface. Even if a re-peelable adhesive layer AL having somewhat stronger adhesive force is used on the inner surface of the cover sheet 20, the opposing inner surface 22a of the rear sheet portion 22 is a non-adhesive surface, and therefore does not adhere to the rear surface 11b of the case 11. Alternatively, instead of the release sheet 38, the same adhesive tape as the adhesive tape 35 attached to the inner surfaces of the tabs 33 and 34 may be attached to the opposing inner surface 22a of the rear sheet portion 22 so that the opposing inner surface 22a serves as a non-adhesive surface.

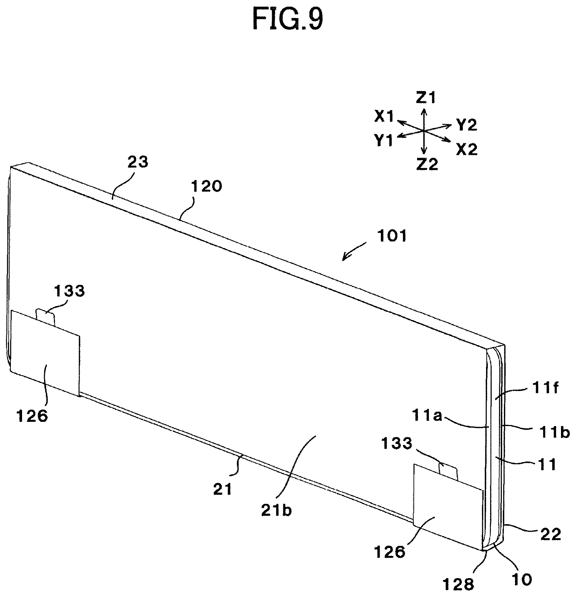

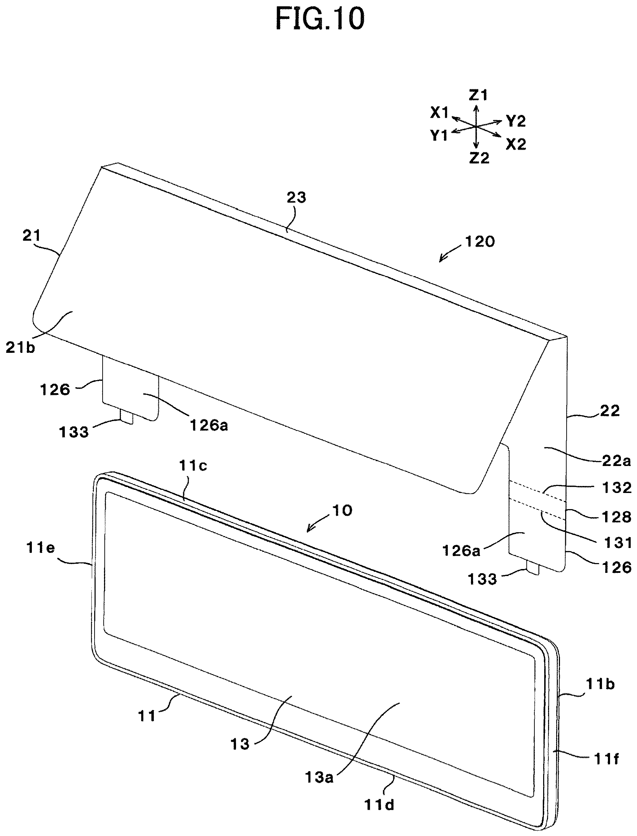

FIGS. 9 and 10 illustrate a package 101 of a display device according to a second embodiment of the present disclosure. A cover sheet 120 used in the package 101 according to the second embodiment is formed such that the front sheet portion 21, the vertical intermediate portion 23, and a rear sheet portion 22 are continuously connected in the vertical direction. Two vertical connecting pieces 126 extend downward (in the Z2 direction) from both left and right sides of the rear sheet portion 22. A vertical intermediate portion 128 is positioned between the rear sheet portion 22 and each vertical connecting piece 126; and the rear sheet portion 22, the vertical intermediate portions 128, and the vertical connecting pieces 126 are continuously formed in the vertical direction. Perforations 131 are formed at a boundary between each vertical connecting piece 126 and the vertical intermediate portion 128, and perforations 132 are formed at a boundary between each vertical intermediate portion 128 and the rear sheet portion 22. As illustrated in FIG. 10, the entire inner surface of the cover sheet 120 facing the display device 10 is a re-peelable adhesive surface, and the bonding inner surface 126a of each vertical connecting piece 126 is also a re-peelable adhesive surface. Each vertical connecting piece 126 is integrally formed with a tab 133 protruding downward, and an adhesive tape is attached to the inner surface of each tab 133.

In the packaging operation using the cover sheet 120, after the bonding inner surface 21a of the front sheet portion 21 is adhered in close contact with the front surface 13a of the transparent panel 13 disposed at the front of the display device 10, the rear sheet portion 22 is disposed facing the rear surface 11b of the case 11 of the display device 10. Then, two vertical connecting pieces 126 extending downward from the display device 10 are drawn forward, and as illustrated in FIG. 9, the bonding inner surfaces 126a of the two vertical connecting pieces 126 are adhered in close contact with the outer surface 21b of the front sheet portion 21. It should be noted that, in addition to providing the left connecting piece 26 and right connecting piece 27 illustrated in FIG. 5 on the rear sheet portion 22, the vertical connecting pieces 126 illustrated in FIGS. 9 and 10 may further be provided.

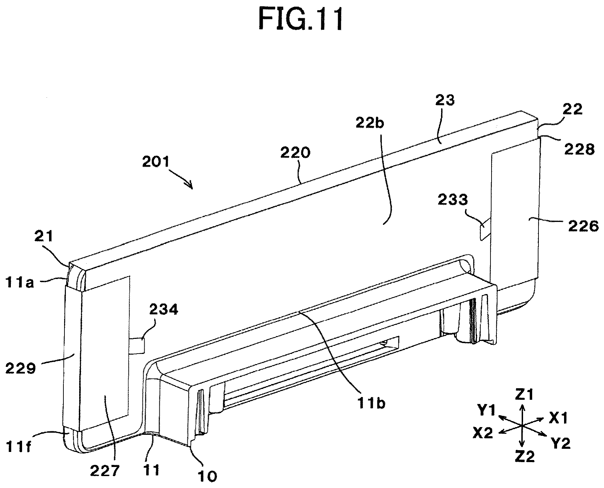

FIG. 11 illustrates a package 201 of a display device according to a third embodiment of the present disclosure. A cover sheet 220 used in the package 201 according to the third embodiment includes a left connecting piece 226 extending from the front sheet portion 21, and a lateral intermediate portion 228 disposed between the front sheet portion 21 and the left connecting piece 226. Perforations are formed at a boundary between the left connecting piece 226 and the lateral intermediate portion 228, and other perforations are formed at a boundary between the lateral intermediate portion 228 and the front sheet portion 21. A right connecting piece 227 extends from the front sheet portion 21, and a lateral intermediate portion 229 is disposed between the front sheet portion 21 and the right connecting piece 227. Perforations are formed at a boundary between the right connecting piece 227 and the lateral intermediate portion 229, and other perforations are formed at a boundary between the lateral intermediate portion 229 and the front sheet portion 21. In the modified example of the cover sheet 220 illustrated in FIG. 11, the entire inner surface facing the display device 10 also serves as the re-peelable adhesive surface. A tab 233 continuously extends from the left connecting piece 226, and a tab 234 continuously extends from the right connecting piece 227.

In a packaging operation using the cover sheet 220, the bonding inner surface 21a of the front sheet portion 21 is brought into close contact with the front surface 13a of the transparent panel 13 disposed at the front of the display device 10, and is adhesively bonded to the front surface 13a. Subsequently, the rear sheet portion 22 is disposed to face the rear surface 11b of the case 11 of the display device 10. Then, the left connecting piece 226 and the right connecting piece 227, which extend laterally from the front sheet portion 21, are extended rearward of the display device 10. As illustrated in FIG. 11, the bonding inner surface of the left connecting piece 226 and the bonding inner surface of the right connecting piece 227 are brought into close contact with the outer surface 22b of the rear sheet portion 22 and are adhesively bonded to the outer surface 22b.

Although the present disclosure has been described with reference to embodiments, the present disclosure is not limited to the configurations and elements described in the embodiments, and the configurations and the elements described in the embodiments may be combined with other configurations and elements, and the above-described embodiments can be changed as appropriate without departing from the scope of the claims.

## Claims

1. A cover sheet for a display device, the display device including a case for housing a display cell and a transparent panel for covering a display screen oriented forward from the case, the cover sheet comprising:
a front sheet portion configured to cover a front surface of the transparent panel;
a rear sheet portion configured to cover a rear surface of the case; and
a connecting piece extending from either the rear sheet portion or the front sheet portion,
wherein the front sheet portion, the rear sheet portion, and the connecting piece are integrally formed,
wherein the front sheet portion has a bonding inner surface and an outer surface, the rear sheet portion has an opposing inner surface and an outer surface, and the connecting piece has a bonding inner surface and an outer surface, the bonding inner surface of the front sheet portion, the bonding inner surface of the connecting piece, and the opposing inner surface being disposed on a same sheet surface,
wherein at least the bonding inner surface of the front sheet portion and the bonding inner surface of the connecting piece are re-peelable adhesive surfaces,
wherein the bonding inner surface of the front sheet portion is configured to be adhesively bonded to the front surface of the transparent panel, and
wherein the bonding inner surface of the connecting piece is configured to be adhesively bonded to either the outer surface of the front sheet portion or the outer surface of the rear sheet portion.

2. The cover sheet according to claim 1, wherein an entire sheet surface, including the bonding inner surface of the front sheet portion, the bonding inner surface of the connecting piece, and the opposing inner surface, is formed as a re-peelable adhesive surface.

3. The cover sheet according to claim 1 or 2, wherein the opposing inner surface of the rear sheet portion is a non-adhesive surface.

4. The cover sheet according to claim 3, wherein an entire sheet surface, including the bonding inner surface of the front sheet portion, the bonding inner surface of the connecting piece, and the opposing inner surface, is formed as a re-peelable adhesive surface, and wherein a release sheet is disposed on the opposing inner surface.

5. The cover sheet according to one of claims 1 to 4, wherein the cover sheet comprises a base film made of polyethylene terephthalate (PET).

6. A package for a display device, the package comprising:
a display device including a case for housing a display cell and a transparent panel for covering a display screen oriented forward from the case; and
a cover sheet according to one of the preceding claims configured to cover the display device,
wherein the front sheet portion is covering the front surface of the transparent panel, and the rear sheet portion is covering a rear surface of the case,
wherein the bonding inner surface of the front sheet portion is adhesively bonded to the front surface of the transparent panel, and
wherein, when the connecting piece extends from the rear sheet portion, the connecting piece extends forward of the display device and the bonding inner surface of the connecting piece is adhesively bonded to the outer surface of the front sheet portion, and when the connecting piece extends from the front sheet portion, the connecting piece extends rearward of the display device and the bonding inner surface of the connecting piece is adhesively bonded to the outer surface of the rear sheet portion.

7. The package according to claim 6, wherein the cover sheet has an entire sheet surface formed as a re-peelable adhesive surface, the entire sheet surface including the bonding inner surface of the front sheet portion, the bonding inner surface of the connecting piece, and the opposing inner surface, wherein a rear surface of the case has a greater surface roughness than a front surface of the transparent panel, and wherein the opposing inner surface of the rear sheet portion is not adhered to the rear surface of the case.

8. The package according to claim 6 or 7, wherein the cover sheet has an entire sheet surface formed as a re-peelable adhesive surface, the entire sheet surface including the bonding inner surface of the front sheet portion, the bonding inner surface of the connecting piece, and the opposing inner surface, and wherein a release sheet is disposed on the opposing inner surface.

9. The package according to one of claims 6 to 8, wherein the cover sheet comprises a base film made of polyethylene terephthalate (PET).
